# EUROPEAN PATENT APPLICATION

(11) **EP 4 456 620 A1**
(43) Date of publication of application: **30.10.2024**
(21) Application number: 22921759.1
(22) Date of filing: 29.12.2022
(51) Int. Cl.: H04W 56/00

(54) **TIME SYNCHRONIZATION METHOD, APPARATUS AND SYSTEM**

(30) Priority: 24.01.2022 CN 202210082465
(71) Applicant: Huawei Technologies Co., Ltd., Shenzhen, Guangdong 518129 (CN)
(72) Inventor: LIU, Yongjun, Shenzhen, Guangdong 518129 (CN)
(74) Representative: Körber, Martin Hans
(86) International application number: PCT/CN2022/143580
(87) International publication number: WO 2023/138339

(57) **Abstract**

Embodiments of this application provide a time synchronization method, an apparatus, and a system, to improve accuracy of time synchronization between devices in a distributed camera service scenario. The method includes: A first device receives a first message from a second device, where the first message includes a first time stamp and a second time stamp, the first time stamp is a time stamp of a second Wi-Fi module in the second device at a first moment, and the second time stamp is a system time stamp of a second main chip in the second device at a second moment; and the first device adjusts system time of a first main chip in the first device based on the first time stamp, the second time stamp, a third time stamp, and a fourth time stamp, where the third time stamp is a time stamp of a first Wi-Fi module in the first device at a third moment, the fourth time stamp is a system time stamp of the first main chip at a fourth moment, a time difference between the first moment and the second moment is equal to a time difference between the third moment and the fourth moment, and the first Wi-Fi module and the second Wi-Fi module have implemented time synchronization before the first moment.

## Description

This application claims priority to Chinese Patent Application No. 202210082465.0, filed with the China National Intellectual Property Administration on January 24, 2021 and entitled "TIME SYNCHRONIZATION METHOD, APPARATUS, AND SYSTEM", which is incorporated herein by reference in its entirety.

### TECHNICAL FIELD

This application relates to the communication field, and in particular, to a time synchronization method, an apparatus, and a system.

### BACKGROUND

When data is processed across devices, it is usually expected that overall consumed time of a processing procedure is as short as possible. For example, in a distributed camera service scenario such as web television live broadcast or real-time monitoring, an image captured by a camera is transmitted to a screen of a television, a smartphone, or a large screen end via a network for display. If the overall consumed time of the processing procedure is greater than a specified threshold, a display image seen by a user is delayed or pauses, bringing unsmooth watching experience to the user. To locate and analyze processing phases that cause excessively high overall time consumption due to their excessively high time consumption, a system outputs, in each processing phase, log information used to analyze a time consumption status. The log information includes a time stamp obtained when data enters the processing phase and a time stamp obtained when the data leaves the processing phase, or includes a time stamp obtained when data enters the processing phase and processing duration of the data in the processing phase. In this method for analyzing consumed time of cross-device data processing based on a time stamp, system time of devices needs to be kept synchronized.

In the conventional technology, system time of devices in a local area network is usually synchronized by using a network time protocol (network time protocol, NTP). However, in the distributed camera service scenario, because system resources of an internet of things (internet of things, IOT) device such as a camera or a smartphone are limited and low power consumption is required, the IOT device is not suitable for enabling the NTP protocol.

### SUMMARY

Embodiments of this application provide a time synchronization method, an apparatus, and a system, to improve accuracy of system time synchronization between devices in a distributed camera service scenario.

To achieve the foregoing objectives, the following technical solutions are used in embodiments of this application.

According to a first aspect, a time synchronization method applied to a distributed camera service scenario is provided. An apparatus that performs the time synchronization method may be a first device, or may be a module used in the first device, for example, a chip or a chip system. The following provides descriptions by using an example in which an execution body is the first device. The first device receives a first message from a second device, where the first message includes a first time stamp and a second time stamp, the first time stamp is a time stamp of a second wireless fidelity WI-FI module in the second device at a first moment, and the second time stamp is a system time stamp of a second main chip in the second device at a second moment. The first device adjusts system time of a first main chip in the first device based on the first time stamp, the second time stamp, a third time stamp, and a fourth time stamp, where the third time stamp is a time stamp of a first WI-FI module in the first device at a third moment, the fourth time stamp is a system time stamp of the first main chip at a fourth moment, a time difference between the first moment and the second moment is equal to a time difference between the third moment and the fourth moment, and the first WI-FI module and the second WI-FI module have implemented time synchronization before the first moment.

In the time synchronization method provided in this embodiment of this application, after the first WI-FI module and the second WI-FI module implement time synchronization, the first device adjusts the system time of the first main chip in the first device based on the first time stamp, the second time stamp, the third time stamp, and the fourth time stamp. Compared with an NTP protocol used in the conventional technology, on one hand, because of occupying less system resources and causing lower device power consumption, a WI-FI protocol may be widely applied to an IOT device. Therefore, the time synchronization method provided in this embodiment of this application is more applicable to the distributed camera service scenario. On the other hand, because WI-FI module time synchronization between the first device and the second device can be implemented at a microsecond level, the time synchronization method provided in this embodiment of this application can improve time synchronization accuracy.

With reference to the first aspect, in a possible implementation, before the first device receives the first message from the second device, the method further includes: The first device receives a fifth time stamp from the second device, where the fifth time stamp is a time stamp of the second WI-FI module at a fifth moment, and the fifth moment is earlier than the first moment; and the first device uses the fifth time stamp as a current time stamp of the first WI-FI module; or the first device sends a sixth time stamp to the second device, where the sixth time stamp is a time stamp of the first WI-FI module at the fifth moment.

With reference to the first aspect, in a possible implementation, that the first device adjusts system time of a first main chip in the first device based on the first time stamp, the second time stamp, a third time stamp, and a fourth time stamp includes: The first device determines, based on the first time stamp, the second time stamp, the third time stamp, and the fourth time stamp, deviation time of system time of the first device relative to system time of the second device; and if an absolute value of the deviation time is greater than a first threshold, the first device adds the deviation time to current system time, to obtain synchronized current system time of the first main chip. In this solution, the system time of the second device is used as a reference, and if there is a deviation between the system time of the first device and the system time of the second device and an absolute value of the deviation is greater than the first threshold, the system time of the first device is adjusted.

With reference to the first aspect, in a possible implementation, the deviation time is a difference obtained by subtracting a second time difference from a first time difference, the first time difference is a difference obtained by subtracting the second time stamp from the fourth time stamp, and the second time difference is a difference obtained by subtracting the first time stamp from the third time stamp.

With reference to the first aspect, in a possible implementation, the first device adds the deviation time to a system time stamp that is of the first main chip and that is collected before a current moment, to obtain a synchronized system time stamp that is of the first main chip and that is collected before the current moment. In this solution, system time synchronization may occur before data collection or during data collection, so that time synchronization flexibility can be improved. Specifically, if system time synchronization occurs before data collection, the first device may correct the system time of the first device, so that data collected by the first device and data collected by the second device are subsequently based on a same time standard. If system time synchronization occurs during data collection, the first device may correct collected time data and the system time of the first device.

According to a second aspect, a communication apparatus is provided, configured to implement the foregoing method. The communication apparatus includes corresponding modules, units, or means (means) for implementing the foregoing method. The modules, units, or means may be implemented by hardware, software, or hardware executing corresponding software. The hardware or the software includes one or more modules or units corresponding to the foregoing functions.

With reference to the second aspect, in a possible implementation, the communication apparatus is used in a distributed camera service scenario, and the communication apparatus includes a first main chip and a first WI-FI module. The first main chip is configured to receive a first message from a second device, where the first message includes a first time stamp and a second time stamp, the first time stamp is a time stamp of a second wireless fidelity WI-FI module in the second device at a first moment, and the second time stamp is a system time stamp of a second main chip in the second device at a second moment. The first main chip is further configured to adjust system time of the first main chip in the communication apparatus based on the first time stamp, the second time stamp, a third time stamp, and a fourth time stamp, where the third time stamp is a time stamp of the first WI-FI module at a third moment, the fourth time stamp is a system time stamp of the first main chip at a fourth moment, a time difference between the first moment and the second moment is equal to a time difference between the third moment and the fourth moment, and the first WI-FI module and the second WI-FI module have implemented time synchronization before the first moment.

With reference to the second aspect, in a possible implementation, the first WI-FI module is configured to receive a fifth time stamp from the second device, where the fifth time stamp is a time stamp of the second WI-FI module at a fifth moment, and the fifth moment is earlier than the first moment; and the first WI-FI module is further configured to use the fifth time stamp as a current time stamp of the first WI-FI module; or the first WI-FI module is configured to send a sixth time stamp to the second device, where the sixth time stamp is a time stamp of the first WI-FI module at the fifth moment.

With reference to the second aspect, in a possible implementation, the first main chip is specifically configured to: determine, based on the first time stamp, the second time stamp, the third time stamp, and the fourth time stamp, deviation time of system time of the communication apparatus relative to system time of the second device; and if an absolute value of the deviation time is greater than a first threshold, add the deviation time to current system time, to obtain synchronized current system time of the first main chip.

With reference to the second aspect, in a possible implementation, the deviation time is a difference obtained by subtracting a second time difference from a first time difference, the first time difference is a difference obtained by subtracting the second time stamp from the fourth time stamp, and the second time difference is a difference obtained by subtracting the first time stamp from the third time stamp.

With reference to the second aspect, in a possible implementation, the first main chip is further configured to add the deviation time to a system time stamp that is of the first main chip and that is collected before a current moment, to obtain a synchronized system time stamp that is of the first main chip and that is collected before the current moment.

According to a third aspect, a communication apparatus is provided, including a processor. The processor is configured to perform, after being coupled to a memory and reading computer instructions stored in the memory, the method according to the first aspect according to the instructions.

With reference to the third aspect, in a possible implementation, the communication apparatus further includes the memory. The memory is configured to store the computer instructions.

With reference to the third aspect, in a possible implementation, the communication apparatus further includes a communication interface. The communication interface is used by the communication apparatus to communicate with another device. For example, the communication interface may be a transceiver, an input/output interface, an interface circuit, an output circuit, an input circuit, a pin, or a related circuit.

With reference to the third aspect, in a possible implementation, the communication apparatus may be a chip or a chip system. When the communication apparatus is a chip system, the communication apparatus may include a chip, or may include a chip and another discrete device.

According to a fourth aspect, a computer-readable storage medium is provided. The computer-readable storage medium stores instructions, and when the instructions are run on a computer, the computer is enabled to perform the method according to the first aspect.

According to a fifth aspect, a computer program product including instructions is provided. When the computer program product runs on a computer, the computer is enabled to perform the method according to the first aspect.

According to a sixth aspect, a communication system is provided, including a first device and a second device. The second device is configured to send a first message to the first device, where the first message includes a first time stamp and a second time stamp, the first time stamp is a time stamp of a second wireless fidelity WI-FI module in the second device at a first moment, and the second time stamp is a system time stamp of a second main chip in the second device at a second moment. The first device is configured to: receive the first message from the second device, and adjust system time of a first main chip in the first device based on the first time stamp, the second time stamp, a third time stamp, and a fourth time stamp, where the third time stamp is a time stamp of a first WI-FI module in the first device at a third moment, the fourth time stamp is a system time stamp of the first main chip at a fourth moment, a time difference between the first moment and the second moment is equal to a time difference between the third moment and the fourth moment, and the first WI-FI module and the second WI-FI module have implemented time synchronization before the first moment.

For technical effects brought by any one of the second aspect to the sixth aspect or possible implementations of the second aspect to the sixth aspect, refer to the technical effects brought by the first aspect or the different implementations of the first aspect. Details are not described herein again.

### BRIEF DESCRIPTION OF DRAWINGS

FIG. 1 is a schematic flowchart of data processing in a distributed camera service scenario in the conventional technology;
FIG. 2 is a diagram of analyzing a time consumption status in a cross-device data processing process based on a time stamp in the conventional technology;
FIG. 3 is a diagram of synchronizing system time by using an NTP protocol in the conventional technology;
FIG. 4 is a diagram of an architecture of a communication system according to an embodiment of this application;
FIG. 5 is a diagram 1 of a structure of a communication apparatus according to an embodiment of this application;
FIG. 6 is a flowchart of a time synchronization method according to an embodiment of this application;
FIG. 7 is a diagram of analyzing a time consumption status in a cross-device data processing process based on a time stamp according to this application;
FIG. 8 is a diagram of a time stamp obtaining manner according to an embodiment of this application; and
FIG. 9 is a diagram 2 of a structure of a communication apparatus according to an embodiment of this application.

### DESCRIPTION OF EMBODIMENTS

For ease of understanding the technical solutions in embodiments of this application, related technologies or terms of this application are first briefly described as follows:

First, data processing in a distributed camera service scenario is described.

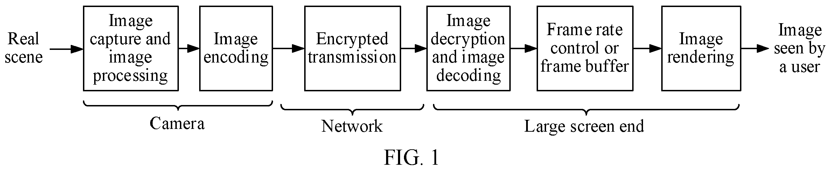

FIG. 1 shows main steps included in data processing in the distributed camera service scenario. At a camera end, image capture, image processing, and image encoding are performed on a real scene. Encoded image data is transmitted from the camera end to a large screen end via a network. At the large screen end, image decryption, image decoding, frame rate control (or frame buffer), and image rendering are performed to form an image finally seen by a user. Data processing relates to different devices, namely, a camera and the large screen end.

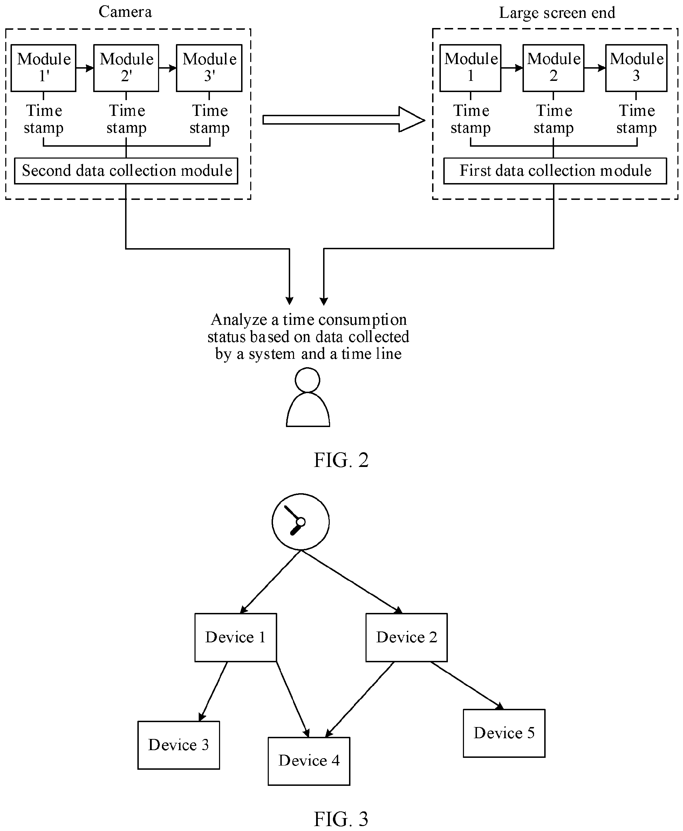

With reference to FIG. 1, FIG. 2 is a diagram of analyzing a time consumption status in a cross-device data processing process based on a time stamp. In FIG. 2, a data processing procedure of the camera end is simplified as follows: first passing through a module 1', then passing through a module 2', and finally passing through a module 3'; and a data processing procedure of the large screen end is simplified as follows: first passing through a module 1, then passing through a module 2, and finally passing through a module 3. It should be noted that, as an example, data processing at the camera end in FIG. 2 relates to three modules: the module 1', the module 2', and the module 3'. Actually, data processing at the camera end may relate to at least one module. Similarly, as an example, data processing at the large screen end in FIG. 2 also relates to three modules: the module 1, the module 2, and the module 3. Actually, data processing at the large screen end may relate to at least one module, and a quantity of modules in the camera is not necessarily equal to a quantity of modules at the large screen end. In addition, the camera further has a second data collection module, and the large screen end further has a first data collection module. As described in the background, the second data collection module may collect a time stamp obtained when data enters each of the module 1', the module 2', and the module 3' and a time stamp obtained when the data leaves each of the module 1', the module 2', and the module 3'; and the first data collection module may collect a time stamp obtained when data enters each of the module 1, the module 2, and the module 3 and a time stamp obtained when the data leaves each of the module 1, the module 2, and the module 3. Alternatively, the second data collection module may collect a time stamp obtained when data enters each of the module 1', the module 2', and the module 3' and processing duration of the data in each of the module 1', the module 2', and the module 3'; and the first data collection module may collect a time stamp obtained when data enters each of the module 1, the module 2, and the module 3 and processing duration of the data in each of the module 1, the module 2, and the module 3. System development or commissioning personnel analyze a time consumption status based on collected data and a time line. Provided that system time of the camera is kept synchronized with that of the large screen end, data collected in the two devices can be sorted in time sequence, so that the system development or commissioning personnel can analyze a time consumption status of each of the module 1, the module 2, the module 3, the module 1', the module 2', and the module 3' based on the sorted data.

Second, an NTP protocol is described.

Usually, the NTP protocol is used to synchronize system time of devices in a local area network. The NTP protocol may use a client (client)-server (server) structure. Specifically, a client synchronizes system time from a server, and the server synchronizes system time from an upper-layer device of the server. A top-layer device is a high-accuracy clock source. For example, as shown in FIG. 3, a device 3 and a device 4 synchronize system time from a device 1, the device 4 and a device 5 synchronize system time from a device 2, and the device 1 and the device 2 synchronize time from a same clock source. In this manner, the devices 1 to 5 in a network can basically keep system time synchronization. However, in this solution, all devices need to be connected to the network and use the NTP protocol.

On one hand, as described in the background, an IOT device is not suitable for enabling the NTP protocol. On the other hand, the NTP protocol synchronizes system time by using network hierarchy. Therefore, usually, time synchronization accuracy can only be accurate to a millisecond level. However, in some scenarios, higher-accuracy time synchronization is required. For example, in a distributed camera service scenario, provided that overall consumed time of a processing procedure is less than 200 milliseconds, a display image seen by a user is not delayed or does not pause. Therefore, a higher requirement is imposed on time synchronization accuracy.

The following describes the technical solutions in embodiments of this application with reference to the accompanying drawings in embodiments of this application. In the descriptions of this application, unless otherwise specified, "/" indicates an "or" relationship between associated objects. For example, A/B may indicate A or B. In this application, "and/or" describes only an association relationship between associated objects and indicates that three relationships may exist. For example, A and/or B may indicate the following three cases: Only A exists, both A and B exist, and only B exists, where A and B may be singular or plural. In addition, in the descriptions of this application, unless otherwise specified, "a plurality of" means two or more. "At least one of the following items (pieces)" or a similar expression thereof means any combination of these items, including any combination of singular items (pieces) or plural items (pieces). For example, at least one item (piece) of a, b, or c may indicate: a, b, c, a and b, a and c, b and c, or a, b, and c, where a, b, and c may be singular or plural. In addition, to clearly describe the technical solutions in embodiments of this application, words such as "first" and "second" are used in embodiments of this application to distinguish between same items or similar items that provide basically same functions or purposes. A person skilled in the art may understand that the words such as "first" and "second" do not limit a quantity or an execution sequence, and the words such as "first" and "second" do not indicate a definite difference. In addition, in embodiments of this application, words such as "an example" or "for example" are used to indicate giving an example, an illustration, or a description. Any embodiment or design solution described as "an example" or "for example" in embodiments of this application should not be explained as being more preferred or having more advantages than another embodiment or design solution. Exactly, use of the words such as "an example" or "for example" is intended to present a related concept in a specific manner, for ease of understanding.

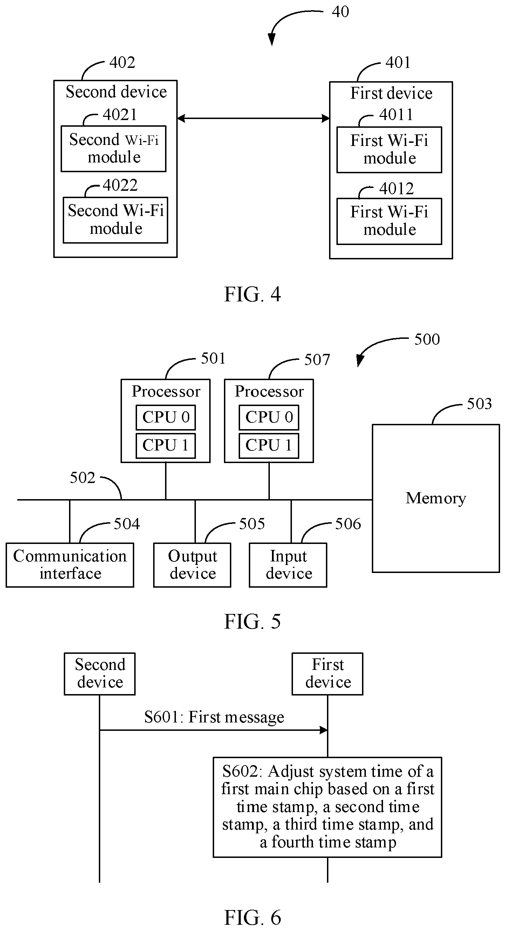

FIG. 4 shows a communication system 40 according to an embodiment of this application. The communication system 40 includes a first device 401 and a second device 402. The first device 401 includes a first main chip 4011 and a first synchronous wireless fidelity (wireless fidelity, WI-FI) module 4012, and the second device 402 includes a second main chip 4021 and a second WI-FI module 4022. The second device 402 is configured to send a first message to the first device 401, where the first message includes a first time stamp and a second time stamp, the first time stamp is a time stamp of the second wireless fidelity WI-FI module 4022 in the second device at a first moment, and the second time stamp is a system time stamp of the second main chip 4021 in the second device at a second moment. The first device 401 is configured to receive the first message from the second device 402. The first device 401 is further configured to adjust system time of the first main chip 4011 in the first device based on the first time stamp, the second time stamp, a third time stamp, and a fourth time stamp, where the third time stamp is a time stamp of the first WI-FI module 4012 in the first device at a third moment, the fourth time stamp is a system time stamp of the first main chip 4011 at a fourth moment, a time difference between the first moment and the second moment is equal to a time difference between the third moment and the fourth moment, and the first WI-FI module 4012 and the second WI-FI module 4022 have implemented time synchronization before the first moment. Specific implementations and technical effects of the solution are described in detail in subsequent method embodiments, and details are not described herein.

Optionally, related functions of the first device or the second device in this embodiment of this application may be implemented by one device, may be jointly implemented by a plurality of devices, or may be implemented by one or more functional modules in one device. This is not specifically limited in this embodiment of this application. It may be understood that the foregoing function may be a network element in a hardware device, or may be a software function running on dedicated hardware, a combination of hardware and software, or a virtualized function instantiated on a platform (for example, a cloud platform).

For example, the related functions of the first device or the second device in this embodiment of this application may be implemented by a communication apparatus 500 in FIG. 5.

FIG. 5 is a diagram of a structure of the communication apparatus 500 according to an embodiment of this application. The communication apparatus 500 includes one or more processors 501, a communication line 502, and at least one communication interface (FIG. 5 provides descriptions by using only an example in which a communication interface 504 and one processor 501 are included). Optionally, the communication apparatus may further include a memory 503.

The processor 501 may be a CPU, a microprocessor, an application-specific integrated circuit (application-specific integrated circuit, ASIC), or one or more integrated circuits configured to control program execution of the solutions of this application.

The communication line 502 may include a path, configured to connect different components.

The communication interface 504 may be a transceiver module, configured to communicate with another device or a communication network, for example, Ethernet, a RAN, or a WLAN. For example, the transceiver module may be an apparatus such as a transceiver. Optionally, the communication interface 504 may be a transceiver circuit located in the processor 501, and is configured to implement signal input and signal output of the processor.

The memory 503 may be an apparatus having a storage function. For example, the memory 503 may be a read-only memory (read-only memory, ROM) or another type of static storage device that can store static information and instructions, or a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or another compact disc storage, an optical disc storage (including a compact disc, a laser disc, an optical disc, a digital versatile disc, a Blu-ray disc, and the like), a magnetic disk storage medium or another magnetic storage device, or any other medium that can be configured to carry or store expected program code in a form of an instruction structure or a data structure and that can be accessed by a computer, but is not limited thereto. The memory may exist independently and is connected to the processor through the communication line 502. The memory may alternatively be integrated with the processor.

The memory 503 is configured to store computer-executable instructions for executing the solutions of this application, and the processor 501 controls execution of the computer-executable instructions. The processor 501 is configured to execute the computer-executable instructions stored in the memory 503, to implement the time synchronization method provided in embodiments of this application.

Alternatively, in this embodiment of this application, the processor 501 may perform a processing-related function in the time synchronization method provided in the following embodiments of this application, and the communication interface 504 is responsible for communicating with another device or a communication network. This is not specifically limited in this embodiment of this application.

The computer-executable instructions in this embodiment of this application may also be referred to as application program code. This is not specifically limited in this embodiment of this application.

During specific implementation, as an embodiment, the processor 501 may include one or more CPUs, for example, a CPU 0 and a CPU 1 in FIG. 5.

During specific implementation, as an embodiment, the communication apparatus 500 may include a plurality of processors, for example, the processor 501 and a processor 507 in FIG. 5. Each of the processors may be a single-core (single-CPU) processor, or may be a multi-core (multi-CPU) processor. The processor herein may be one or more devices, circuits, and/or processing cores configured to process data (for example, computer program instructions).

During specific implementation, as an embodiment, the communication apparatus 500 may further include an output device 505 and an input device 506. The output device 505 communicates with the processor 501, and may display information in a plurality of manners.

The communication apparatus 500 may be a general-purpose apparatus or a dedicated apparatus. For example, the communication apparatus 500 may be a desktop computer, a portable computer, a network server, a palmtop computer (personal digital assistant, PDA), a mobile phone, a tablet computer, a wireless terminal apparatus, an in-vehicle terminal apparatus, an embedded device, or a device having a structure similar to that in FIG. 5. A type of the communication apparatus 500 is not limited in this embodiment of this application.

The following specifically describes, with reference to FIG. 1 to FIG. 5, the time synchronization method provided in embodiments of this application.

FIG. 6 shows a time synchronization method according to an embodiment of this application. The time synchronization method is applied to a distributed camera service scenario, and includes the following steps.

S601: A second device sends a first message to a first device. The first message includes a first time stamp and a second time stamp, the first time stamp is a time stamp of a second WI-FI module in the second device at a first moment, and the second time stamp is a system time stamp of a second main chip in the second device at a second moment. Correspondingly, the first device receives the first message from the second device.

With reference to FIG. 1 or FIG. 2, the first device may be a large screen end, and the second device may be a camera; or the first device may be a camera, and the second device may be a large screen end. This is not limited in this embodiment of this application.

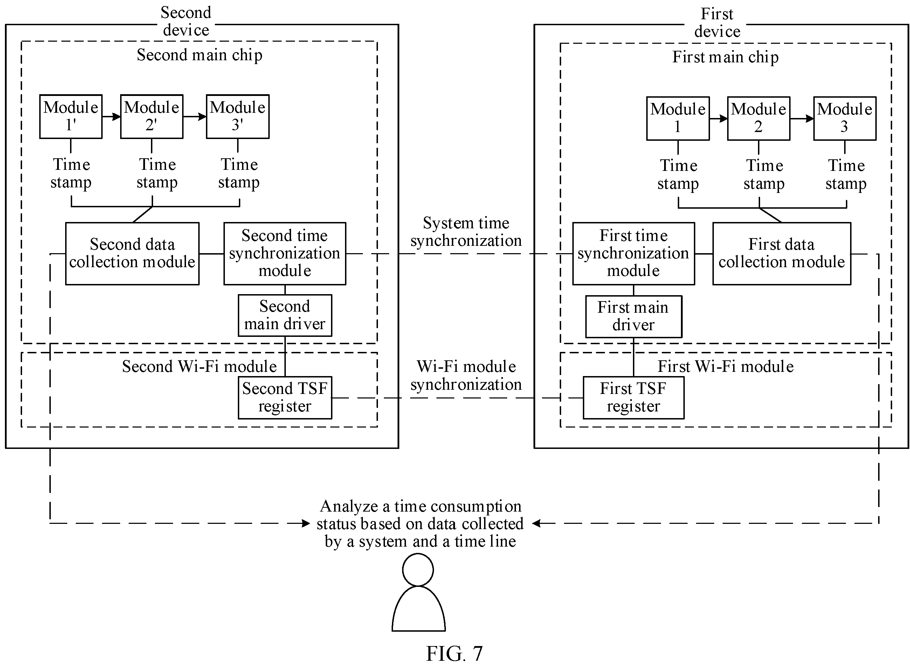

With reference to FIG. 2, FIG. 7 is a diagram of a structure of a communication system according to an embodiment of this application. Compared with FIG. 2, the second device shown in FIG. 7 further has the second WI-FI module, a second time synchronization module, and a second main driver. The second time synchronization module, a second data collection module, the second main driver, and a module 1', a module 2', and a module 3' that are configured to process data are located on the second main chip, and a second timing synchronization function (timing synchronization function, TSF) register is located in the second WI-FI module. Similarly, compared with FIG. 2, the first device shown in FIG. 7 further has a first WI-FI module, a first time synchronization module, and a first main driver. The first time synchronization module, a first data collection module, the first main driver, and a module 1, a module 2, and a module 3 that are configured to process data are located on a first main chip, and a first TSF register is located in the first WI-FI module.

In this embodiment of this application, the first time synchronization module and the second time synchronization module may be configured to perform system time synchronization between the first device and the second device. The first main driver may be configured to obtain system time of the first device, and the second main driver may be configured to obtain system time of the second device. The first WI-FI module and the second WI-FI module may be configured to perform WI-FI communication between the first device and the second device. The first TSF register and the second TSF register may be configured to perform synchronization between the first WI-FI module and the second WI-FI module. Specific functions of the modules are described in detail in subsequent method embodiments, and details are not described herein.

For example, the first message may include the following packet:

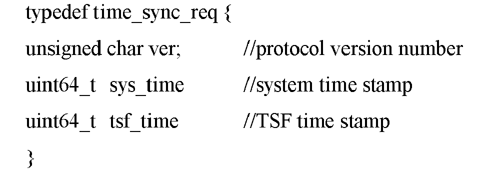

}With reference to FIG. 7, in a possible implementation, step S601 may be implemented in the following manner: The second time synchronization module obtains the time stamp of the second WI-FI module from the second TSF register at the first moment, and obtains the system time of the second device from the second main driver at the second moment. Then, the second time synchronization module sends the first message to the first time synchronization module through the second WI-FI module and the first WI-FI module. Correspondingly, the first time synchronization module receives the first message from the second time synchronization module through the first WI-FI module and the second WI-FI module. For example, the second time synchronization module may send the first message to an enhanced distributed channel access (enhanced distributed channel access, EDCA) high-priority queue of the second WI-FI module, so that the second WI-FI module preferentially sends the first message in the EDCA high-priority queue to the first WI-FI module. Alternatively, the second time synchronization module sends the first message to the first time synchronization module through another communication interface, for example, a network interface on a second time synchronization module side and a network interface on a first time synchronization module side.

S602: The first device adjusts system time of the first main chip in the first device based on the first time stamp, the second time stamp, a third time stamp, and a fourth time stamp. The third time stamp is a time stamp of the first WI-FI module in the first device at a third moment, the fourth time stamp is a system time stamp of the first main chip at a fourth moment, a time difference between the first moment and the second moment is equal to a time difference between the third moment and the fourth moment, and the first WI-FI module and the second WI-FI module have implemented time synchronization before the first moment.

It may be understood that, in this embodiment of this application, a WI-FI connection needs to be established between the first device and the second device, to implement the time synchronization between the first WI-FI module and the second WI-FI module.

In a possible implementation, before step S601, the time synchronization method provided in this embodiment of this application further includes: The second device sends a fifth time stamp to the first device, where the fifth time stamp is a time stamp of the second WI-FI module at a fifth moment, and the fifth moment is earlier than the first moment. Correspondingly, the first device receives the fifth time stamp from the second device, and uses the fifth time stamp as a current time stamp of the first WI-FI module.

In another possible implementation, before step S601, the time synchronization method provided in this embodiment of this application further includes: The first device sends a sixth time stamp to the second device, where the sixth time stamp is a time stamp of the first WI-FI module at a fifth moment. Correspondingly, the second device receives the sixth time stamp from the first device, and uses the sixth time stamp as a current time stamp of the second WI-FI module.

For example, the fifth time stamp or the sixth time stamp in this embodiment of this application may be carried in a beacon frame or a probe response frame. In the processes described in the foregoing two possible implementations, a TSF characteristic of the WI-FI module is used. Because the TSF characteristic of the WI-FI module can implement microsecond-level time synchronization, compared with an NTP protocol used in the conventional technology, this solution can improve time synchronization accuracy.

With reference to FIG. 7, after the first WI-FI module implements time synchronization with the second WI-FI module, a time stamp in the first TSF register is the same as a time stamp in the second TSF register.

In this embodiment of this application, the first device may simultaneously obtain the time stamp of the first WI-FI module and the system time stamp of the first device, and the second device may simultaneously obtain the time stamp of the second WI-FI module and the system time stamp of the second device. Alternatively, the first device may first obtain the time stamp of the first WI-FI module and then obtain the system time stamp of the first device, the second device may first obtain the time stamp of the second WI-FI module and then obtain the system time stamp of the second device, and an interval between the two time stamps obtained by the first device is equal to an interval between the two time stamps obtained by the second device. Alternatively, the first device may first obtain the system time stamp of the first device and then obtain the time stamp of the first WI-FI module, the second device may first obtain the system time stamp of the second device and then obtain the time stamp of the second WI-FI module, and an interval between the two time stamps obtained by the first device is equal to an interval between the two time stamps obtained by the second device. In other words, a rule for obtaining the time stamp of the first WI-FI module and the system time stamp of the first device by the first device is consistent with a rule for obtaining the time stamp of the second WI-FI module and the system time stamp of the second device by the second device.

With reference to FIG. 7, optionally, before the first device adjusts the system time of the first main chip, the synchronization method provided in this embodiment of this application may further include: the first time synchronization module obtains the time stamp of the first WI-FI module from the first TSF register at the third moment, and obtains the system time of the first device from the first main driver at the fourth moment.

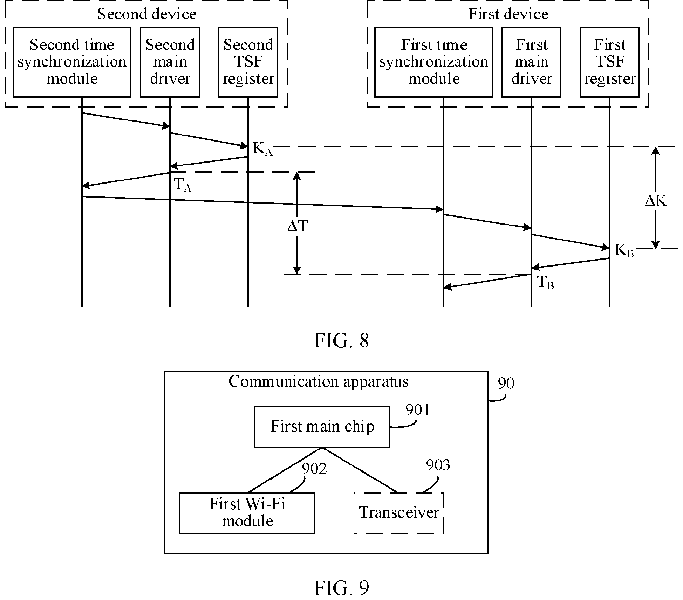

With reference to FIG. 7, for example, FIG. 8 shows a time stamp obtaining manner. K_{A} represents the time stamp of the second WI-FI module at the first moment, T_{A} represents the system time stamp of the second device at the second moment, K_{B} represents the time stamp of the first WI-FI module at the third moment, T_{B} represents the system time stamp of the first device at the fourth moment, ΔT is a difference between T_{B} and T_{A}, and ΔK is a difference between K_{B} and K_{A}. Because the system time of the first device may be slower than or faster than the system time of the second device, or the system time of the first device may have been synchronized with the system time of the second device, ΔT may be zero, a positive number, or a negative number. However, because the first TSF register and the second TSF register have implemented time synchronization before the first moment, and the first moment is earlier than the third moment, a value of ΔK is positive. In the time stamp obtaining manner shown in FIG. 8, the second time synchronization module first obtains the time stamp K_{A} of the second WI-FI module and then obtains the system time stamp T_{A} of the second device, the first time synchronization module first obtains the time stamp K_{B} of the first WI-FI module and then obtains the system time stamp T_{B} of the first device, and an interval between K_{A} and T_{A} that are obtained by the second time synchronization module is equal to an interval between K_{B} and T_{B} that are obtained by the first time synchronization module.

In a possible implementation, in this embodiment of this application, that the first device adjusts the system time of the first main chip in the first device based on the first time stamp, the second time stamp, a third time stamp, and a fourth time stamp includes: The first device determines, based on the first time stamp, the second time stamp, the third time stamp, and the fourth time stamp, deviation time of system time of the first device relative to the system time of the second device; and if an absolute value of the deviation time is greater than a first threshold, the first device adds the deviation time to current system time, to obtain synchronized current system time of the first main chip. In this solution, the system time of the second device is used as a reference, and if there is a deviation between the system time of the first device and the system time of the second device and an absolute value of the deviation is greater than the first threshold, the system time of the first device is adjusted.

Optionally, the first device may feed back, to the second device, whether time synchronization succeeds. With reference to FIG. 7, a feedback process may be specifically implemented by the first time synchronization module and the second time synchronization module. If the first time synchronization module successfully determines the deviation time of the system time of the first device relative to the system time of the second device, it may mean that the first time synchronization module succeeds in system time synchronization. For example, a feedback message may include the following packet:

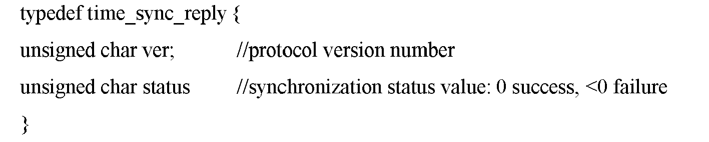

Optionally, the deviation time is a difference obtained by subtracting a second time difference from a first time difference, the first time difference is a difference obtained by subtracting the second time stamp from the fourth time stamp, and the second time difference is a difference obtained by subtracting the first time stamp from the third time stamp.

With reference to FIG. 8, the deviation time may be represented as (T_{B}-T_{A})-(K_{B}-K_{A})=ΔT-ΔK. The deviation time may be zero, a positive number, or a negative number.

In a possible implementation, in this embodiment of this application, the first device adds the deviation time to a system time stamp that is of the first main chip and that is collected before a current moment, to obtain a synchronized system time stamp that is of the first main chip and that is collected before the current moment. In this solution, system time synchronization may occur before data collection or during data collection, so that time synchronization flexibility can be improved. Specifically, if system time synchronization occurs before data collection, the first device may correct the system time of the first device, so that data collected by the first device and data collected by the second device are subsequently based on a same time standard. If system time synchronization occurs during data collection, the first device may correct collected time data and the system time of the first device.

In the time synchronization method provided in this embodiment of this application, after the first WI-FI module and the second WI-FI module implement time synchronization, the first device adjusts the system time of the first main chip in the first device based on the first time stamp, the second time stamp, the third time stamp, and the fourth time stamp. Compared with an NTP protocol used in the conventional technology, on one hand, because of occupying less system resources and causing lower device power consumption, a WI-FI protocol may be widely applied to an IOT device. Therefore, the time synchronization method provided in this embodiment of this application is more applicable to the distributed camera service scenario. On the other hand, because WI-FI module time synchronization between the first device and the second device can be implemented at a microsecond level, the time synchronization method provided in this embodiment of this application can improve time synchronization accuracy.

Both the first device and the second device in the foregoing embodiments may use the architecture of the communication apparatus 500 shown in FIG. 5. Therefore, the processor 501 in the communication apparatus 500 shown in FIG. 5 may invoke application program code stored in the memory 503, to instruct the first device to perform the actions of the first device in the foregoing embodiments, and the processor 501 in the communication apparatus 500 shown in FIG. 5 may invoke application program code stored in the memory 503, to instruct the second device to perform the actions of the second device in the foregoing embodiments. This is not limited in embodiments.

It may be understood that, in the foregoing embodiments, the method and/or the step implemented by the first device may alternatively be implemented by a component (for example, a chip or a circuit) that can be used for the first device, and the method and/or the step implemented by the second device may alternatively be implemented by a component (for example, a chip or a circuit) that can be used for the second device.

The foregoing mainly describes the solutions provided in embodiments of this application from a perspective of interaction between network elements. Correspondingly, an embodiment of this application further provides a communication apparatus, and the communication apparatus is configured to implement the foregoing various methods. The communication apparatus may be the first device in the foregoing method embodiments, an apparatus including the foregoing first device, or a component that can be used for the first device; or the communication apparatus may be the second device in the foregoing method embodiments, an apparatus including the foregoing second device, or a component that can be used for the second device. It may be understood that, to implement the foregoing functions, the communication apparatus includes corresponding hardware structures and/or software modules for performing the functions. A person skilled in the art should easily be aware that, in combination with units and algorithm steps of the examples described in embodiments disclosed in this specification, this application can be implemented by hardware or a combination of hardware and computer software. Whether a function is performed by hardware or hardware driven by computer software depends on particular applications and design constraint conditions of the technical solutions. A person skilled in the art may use different methods to implement the described functions for each particular application, but it should not be considered that the implementation goes beyond the scope of this application.

In embodiments of this application, the communication apparatus may be divided into functional modules based on the foregoing method embodiments. For example, functional modules may be obtained through division based on corresponding functions, or two or more functions may be integrated into one processing module. The integrated module may be implemented in a form of hardware, or may be implemented in a form of a software functional module. It should be noted that, in embodiments of this application, module division is an example, and is merely logical function division. During actual implementation, another division manner may be used.

FIG. 9 is a diagram of a structure of a communication apparatus 90. The communication apparatus 90 includes a first main chip 901 and a first WI-FI module 902. Optionally, the communication apparatus 90 further includes a transceiver 903. The transceiver 903 may also be referred to as a transceiver unit, configured to implement a transceiver function, for example, may be a transceiver circuit, a transceiver, or a communication interface.

For example, the communication apparatus 90 is the first device in the foregoing method embodiments.

The first main chip 901 is configured to receive a first message from a second device, where the first message includes a first time stamp and a second time stamp, the first time stamp is a time stamp of a second wireless fidelity WI-FI module in the second device at a first moment, and the second time stamp is a system time stamp of a second main chip in the second device at a second moment. The first main chip 901 is further configured to adjust system time of the first main chip 901 in the communication apparatus 90 based on the first time stamp, the second time stamp, a third time stamp, and a fourth time stamp, where the third time stamp is a time stamp of the first WI-FI module 902 at a third moment, the fourth time stamp is a system time stamp of the first main chip 901 at a fourth moment, a time difference between the first moment and the second moment is equal to a time difference between the third moment and the fourth moment, and the first WI-FI module 902 and the second WI-FI module have implemented time synchronization before the first moment.

In a possible implementation, the first WI-FI module 902 is configured to receive a fifth time stamp from the second device, where the fifth time stamp is a time stamp of the second WI-FI module at a fifth moment, and the fifth moment is earlier than the first moment; and the first WI-FI module 902 is further configured to use the fifth time stamp as a current time stamp of the first WI-FI module 902; or the first WI-FI module 902 is configured to send a sixth time stamp to the second device, where the sixth time stamp is a time stamp of the first WI-FI module 902 at the fifth moment.

In a possible implementation, the first main chip 901 is specifically configured to: determine, based on the first time stamp, the second time stamp, the third time stamp, and the fourth time stamp, deviation time of system time of the communication apparatus 90 relative to system time of the second device; and if an absolute value of the deviation time is greater than a first threshold, add the deviation time to current system time, to obtain synchronized current system time of the first main chip 901.

In a possible implementation, the deviation time is a difference obtained by subtracting a second time difference from a first time difference, the first time difference is a difference obtained by subtracting the second time stamp from the fourth time stamp, and the second time difference is a difference obtained by subtracting the first time stamp from the third time stamp.

In a possible implementation, the first main chip 901 is further configured to add the deviation time to a system time stamp that is of the first main chip 901 and that is collected before a current moment, to obtain a synchronized system time stamp that is of the first main chip 901 and that is collected before the current moment.

In a possible implementation, that the first main chip 901 is configured to receive a first message from a second device includes: The first main chip 901 is configured to receive the first message from the second device through the first WI-FI module 902.

In a possible implementation, that the first main chip 901 is configured to receive a first message from a second device includes: The first main chip 901 is configured to receive the first message from the second device through the transceiver 903.

All related content of the steps in the foregoing method embodiments may be cited in function descriptions of the corresponding functional modules. Details are not described herein again.

In this embodiment, the communication apparatus 90 is presented in a form of functional modules obtained through division in an integrated manner. The "module" herein may be an ASIC, a circuit, a processor that executes one or more software or firmware programs, a memory, an integrated logic circuit, and/or another device capable of providing the foregoing function.

When the communication apparatus 90 is the first device or the second device in the foregoing method embodiments, in a simple embodiment, a person skilled in the art may figure out that the communication apparatus 90 may be in a form of the communication apparatus 500 shown in FIG. 5.

For example, the processor 501 or 507 in the communication apparatus 500 shown in FIG. 5 may invoke computer-executable instructions stored in the memory 503, to enable the communication apparatus 500 to perform the time synchronization method in the foregoing method embodiments. Specifically, the function/implementation process of the first main chip 901 in FIG. 9 may be implemented by the processor 501 or 507 in the communication apparatus 500 shown in FIG. 5 by invoking computer-executable instructions stored in the memory 503. The function/implementation process of the first WI-FI module 902 or the transceiver 903 in FIG. 9 may be implemented through a communication module connected to the communication interface 504 in FIG. 5.

Because the communication apparatus 90 provided in this embodiment can perform the foregoing time synchronization method, for technical effects that can be achieved by the communication apparatus 90, refer to the foregoing method embodiments. Details are not described herein again.

It should be noted that one or more of the foregoing modules or units may be implemented by software, hardware, or a combination thereof. When any one of the foregoing modules or units is implemented by software, the software exists in a form of computer program instructions, and is stored in the memory. The processor may be configured to execute the program instructions and implement the foregoing method procedures. The processor may be built into a SoC (system on chip) or an ASIC, or may be an independent semiconductor chip. In addition to a core configured to perform computing or processing by executing software instructions, the processor may further include a necessary hardware accelerator, for example, a field programmable gate array (field programmable gate array, FPGA), a PLD (programmable logic device), or a logic circuit that implements a dedicated logic operation.

When the foregoing modules or units are implemented by hardware, the hardware may be any one or any combination of a CPU, a microprocessor, a digital signal processing (digital signal processing, DSP) chip, a micro control unit (microcontroller unit, MCU), an artificial intelligence processor, an ASIC, a SoC, an FPGA, a PLD, a dedicated digital circuit, a hardware accelerator, or a non-integrated discrete device, and the hardware may run necessary software or does not depend on software to perform the foregoing method procedures.

Optionally, an embodiment of this application further provides a chip system, including at least one processor and an interface. The at least one processor is coupled to a memory through the interface, and when the at least one processor executes a computer program or instructions in the memory, the method in any one of the foregoing method embodiments is performed. In a possible implementation, the communication apparatus further includes the memory. Optionally, the chip system may include a chip, or may include a chip and another discrete device. This is not specifically limited in this embodiment of this application.

All or some of the foregoing embodiments may be implemented by software, hardware, firmware, or any combination thereof. When the foregoing embodiments are implemented by using a software program, all or some of the foregoing embodiments may be implemented in a form of a computer program product. The computer program product includes one or more computer instructions. When the computer program instructions are loaded and executed on a computer, all or some of the procedures or functions according to embodiments of this application are generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

Although this application is described with reference to embodiments, in a process of implementing this application that claims protection, a person skilled in the art may understand and implement other variations of the disclosed embodiments by viewing the accompanying drawings, disclosed content, and appended claims. In the claims, the word "comprising" (comprising) does not exclude another component or step, and "a" or "one" does not exclude a case of "a plurality of". A single processor or another unit may implement several functions enumerated in the claims. Some measures are recorded in dependent claims that are different from each other, but this does not mean that these measures cannot be combined to produce a better effect.

Although this application is described with reference to specific features and embodiments thereof, it is clear that various modifications and combinations may be made to this application without departing from the spirit and scope of this application. Correspondingly, the specification and accompanying drawings are merely example descriptions of this application defined by the accompanying claims, and are considered as covering any one or all of modifications, variations, combinations, or equivalents in the scope of this application. It is clear that a person skilled in the art can make various modifications and variations to this application without departing from the spirit and scope of this application. In this way, this application is also intended to include these modifications and variations to this application provided that they fall within the scope of the claims of this application and equivalent technologies thereof.

## Claims

1. A time synchronization method, applied to a distributed camera service scenario, wherein the method comprises:
receiving, by a first device, a first message from a second device, wherein the first message comprises a first time stamp and a second time stamp, the first time stamp is a time stamp of a second wireless fidelity Wi-Fi module in the second device at a first moment, and the second time stamp is a system time stamp of a second main chip in the second device at a second moment; and
adjusting, by the first device, system time of a first main chip in the first device based on the first time stamp, the second time stamp, a third time stamp, and a fourth time stamp, wherein the third time stamp is a time stamp of a first Wi-Fi module in the first device at a third moment, the fourth time stamp is a system time stamp of the first main chip at a fourth moment, a time difference between the first moment and the second moment is equal to a time difference between the third moment and the fourth moment, and the first Wi-Fi module and the second Wi-Fi module have implemented time synchronization before the first moment.

2. The method according to claim 1, wherein before the receiving, by a first device, a first message from a second device, the method further comprises:
receiving, by the first device, a fifth time stamp from the second device, wherein the fifth time stamp is a time stamp of the second Wi-Fi module at a fifth moment, and the fifth moment is earlier than the first moment; and
using, by the first device, the fifth time stamp as a current time stamp of the first Wi-Fi module; or
sending, by the first device, a sixth time stamp to the second device, wherein the sixth time stamp is a time stamp of the first Wi-Fi module at the fifth moment.

3. The method according to claim 1 or 2, wherein the adjusting, by the first device, system time of a first main chip in the first device based on the first time stamp, the second time stamp, a third time stamp, and a fourth time stamp comprises:
determining, by the first device based on the first time stamp, the second time stamp, the third time stamp, and the fourth time stamp, deviation time of system time of the first device relative to system time of the second device; and
if an absolute value of the deviation time is greater than a first threshold, adding, by the first device, the deviation time to current system time, to obtain synchronized current system time of the first main chip.

4. The method according to claim 3, wherein the deviation time is a difference obtained by subtracting a second time difference from a first time difference, the first time difference is a difference obtained by subtracting the second time stamp from the fourth time stamp, and the second time difference is a difference obtained by subtracting the first time stamp from the third time stamp.

5. The method according to claim 3 or 4, wherein the method further comprises:
adding, by the first device, the deviation time to a system time stamp that is of the first main chip and that is collected before a current moment, to obtain a synchronized system time stamp that is of the first main chip and that is collected before the current moment.

6. A communication apparatus, wherein the communication apparatus is used in a distributed camera service scenario, and the communication apparatus comprises a first main chip and a first Wi-Fi module;
the first main chip is configured to receive a first message from a second device, wherein the first message comprises a first time stamp and a second time stamp, the first time stamp is a time stamp of a second wireless fidelity Wi-Fi module in the second device at a first moment, and the second time stamp is a system time stamp of a second main chip in the second device at a second moment; and
the first main chip is further configured to adjust system time of the first main chip in the communication apparatus based on the first time stamp, the second time stamp, a third time stamp, and a fourth time stamp, wherein the third time stamp is a time stamp of the first Wi-Fi module at a third moment, the fourth time stamp is a system time stamp of the first main chip at a fourth moment, a time difference between the first moment and the second moment is equal to a time difference between the third moment and the fourth moment, and the first Wi-Fi module and the second WI-FI module have implemented time synchronization before the first moment.

7. The communication apparatus according to claim 6, wherein the first Wi-Fi module is configured to receive a fifth time stamp from the second device, wherein the fifth time stamp is a time stamp of the second Wi-Fi module at a fifth moment, and the fifth moment is earlier than the first moment; and the first Wi-Fi module is further configured to use the fifth time stamp as a current time stamp of the first Wi-Fi module; or
the first Wi-Fi module is configured to send a sixth time stamp to the second device, wherein the sixth time stamp is a time stamp of the first Wi-Fi module at the fifth moment.

8. The communication apparatus according to claim 6 or 7, wherein the first main chip is specifically configured to: determine, based on the first time stamp, the second time stamp, the third time stamp, and the fourth time stamp, deviation time of system time of the communication apparatus relative to system time of the second device; and if an absolute value of the deviation time is greater than a first threshold, add the deviation time to current system time, to obtain synchronized current system time of the first main chip.

9. The communication apparatus according to claim 8, wherein the deviation time is a difference obtained by subtracting a second time difference from a first time difference, the first time difference is a difference obtained by subtracting the second time stamp from the fourth time stamp, and the second time difference is a difference obtained by subtracting the first time stamp from the third time stamp.

10. The communication apparatus according to claim 8 or 9, wherein
the first main chip is further configured to add the deviation time to a system time stamp that is of the first main chip and that is collected before a current moment, to obtain a synchronized system time stamp that is of the first main chip and that is collected before the current moment.

11. The communication apparatus according to any one of claims 6 to 10, wherein that the first main chip is configured to receive a first message from a second device comprises: the first main chip is configured to receive the first message from the second device through the first Wi-Fi module.

12. The communication apparatus according to any one of claims 6 to 10, wherein the communication apparatus further comprises a transceiver, and that the first main chip is configured to receive a first message from a second device comprises: the first main chip is configured to receive the first message from the second device through the transceiver.

13. A communication apparatus, comprising a memory and a processor coupled to the memory, wherein the memory is configured to store a program, the processor is configured to execute the program stored in the memory, and when the communication apparatus runs, the processor runs the program, to enable the communication apparatus to perform the method according to any one of claims 1 to 5.

14. A computer-readable storage medium, wherein the computer-readable storage medium stores a computer program, and when the computer program is executed by a computer, the computer is enabled to perform the method according to any one of claims 1 to 5.

15. A communication system, comprising a first device and a second device, wherein
the second device is configured to send a first message to the first device, wherein the first message comprises a first time stamp and a second time stamp, the first time stamp is a time stamp of a second wireless fidelity Wi-Fi module in the second device at a first moment, and the second time stamp is a system time stamp of a second main chip in the second device at a second moment; and
the first device is configured to: receive the first message from the second device, and adjust system time of a first main chip in the first device based on the first time stamp, the second time stamp, a third time stamp, and a fourth time stamp, wherein the third time stamp is a time stamp of a first Wi-Fi module in the first device at a third moment, the fourth time stamp is a system time stamp of the first main chip at a fourth moment, a time difference between the first moment and the second moment is equal to a time difference between the third moment and the fourth moment, and the first Wi-Fi module and the second Wi-Fi module have implemented time synchronization before the first moment.
